# EUROPÄISCHE PATENTSCHRIFT

(11) **EP 2 698 305 B1**
(45) Veröffentlichungstag und Bekanntmachung des Hinweises auf die Patenterteilung: **04.11.2015**
(21) Anmeldenummer: 13003228.7
(22) Anmeldetag: 25.06.2013
(51) Int. Cl.: B62D 21/06, B62D 21/18, B62D 53/02, E01C 19/23

(54) **Strassenwalze**
Road roller
Rouleau compresseur

(30) Priorität: 13.08.2012 DE 102012016034; 21.01.2013 DE 102013000953
(43) Veröffentlichungstag der Anmeldung: 19.02.2014
(73) Patentinhaber: BOMAG GmbH, 56154 Boppard (DE)
(72) Erfinder: Wagner, Jens, 56154 Boppard (DE); Kreutz, Tobias, 55497 Ellern (DE)
(74) Vertreter: Lang, Friedrich

(56) Entgegenhaltungen:
- EP-A1- 2 423 076
- JP-U- S58 160 880
- US-A- 5 664 909

## Beschreibung

Die Erfindung betrifft eine Straßenwalze mit einem Vorderwagen und einem Hinterwagen, die über ein Pendel-/Knickgelenk miteinander verbunden sind, wobei der Vorderwagen und der Hinterwagen einen Vorderwagen-Rahmen und einen Hinterwagen-Rahmen aufweisen. Die EP 2 423 076 A1 offenbart eine solche Straßenwalze.

Derartige Straßenwalzen werden im Verkehrswegebau eingesetzt und sind allgemein bekannt. Der Vorderwagen und der Hinterwagen weisen jeweils einen Träger-Rahmen auf, der prinzipiell aus außen liegenden Träger- und Stützelementen besteht, zwischen welchen Funktionsbauteile wie Fahrmotor, Hilfsantriebe, Tanks u.ä. angeordnet sind.

Der Erfindung liegt die Aufgabe zu Grunde, eine Straßenwalze der eingangs angegebenen Art anzugeben, bei welcher der Aufbau des Vorderwagen-Rahmens und des Hinterwagen-Rahmens kostengünstig und gleichzeitig stabil ausgeführt werden kann.

Diese Aufgabe wird dadurch gelöst, dass der Vorderwagen-Rahmen und/oder der Hinterwagen-Rahmen aus Holmen besteht, mit jeweils einem Hauptholm, der horizontal in der Längsmittenebene der Straßenwalze verläuft und an dessen einem Ende das Pendel-/Knickgelenk angeordnet ist, und mit zwei vom freien Ende des Hauptholms V-förmig und spiegelbildlich zur Längsmittenebene abgehenden Seitenholmen nach oben ausgerichtet sind, dass die Seitenholme ferner über das freie Ende des Hauptholms frei auskragend angeordnet sind, dass an den freien Enden der Seitenholme parallel zum Hauptholm verlaufende und frei auskragende Tragstütze angeordnet sind, an welchen eine Bandage angeordnet ist.

Die Erfindung hat den Vorteil, dass die Struktur des Vorderwagen-Rahmens und/oder des Hinterwagen-Rahmens wegen ihrer Y-Form einen besonders guten Kraftfluss von der Gelenkanbindung direkt zu den Anbindungen der Stützen ermöglicht, und dass dadurch eine Gewichtseinsparung im Vergleich zu bekannten Rahmenstrukturen erzielt werden kann. Außerdem ermöglicht diese Rahmenstruktur, das Sichtfeld für den Fahrzeugführer von der Fahrerkabine auf die Bandagen und den Untergrund unterhalb der Fahrerkabine zu vergrößern, da die Karosserie der Straßenwalze im Bereich seitlich unterhalb der Fahrerkabine mit einem Versatz nach innen versehen werden kann.

Es erweist sich zur Stabilisierung der Rahmenstruktur als vorteilhaft, dass die freien Enden eines Paares von Seitenholmen durch ein Verbindungsstück verbunden sind.

Besonders einfach wird das Verbindungsstück zwischen den Seitenholmen eines Seitenholmpaares und/oder den Stützen zum Tragen der Fahrerkabine als eine Versteifung aus einem Verstärkungsblech ausgeführt, das in den Zwickel zwischen den Seitenholmen eines Seitenholmpaares eingesetzt ist.

Die Fahrerkabine kann auf einfache Weise am Vorderwagen-Rahmen dadurch angeordnet werden, dass an dem dem Pendel-/Knickgelenk zugewandten Ende des Hauptholms des Vorderwagens nach oben gerichtete sowie V-förmig und spiegelbildlich zur Längsmittenebene angebrachte Tragholme zum Tragen einer Fahrerkabine angeordnet sind.

Des Weiteren ist es zweckmäßig, dass auf den Seitenholmen des Vorderwagens vertikale Stützen zum Tragen der Fahrerkabine angeordnet sind.

Eine weitere Stabilisierung des Vorderwagen-Rahmens kann dadurch erreicht werden, dass zwischen den freien Enden der Seitenholme und/oder der Stützen jeweils eine Querstrebe angeordnet ist.

Es ist hinsichtlich der Steifigkeit des Vorderwagen-Rahmens ferner vorteilhaft, dass das Verstärkungsblech zwischen den freien Enden der Seitenholme und/oder der Stützen ein Teil der betreffenden Querstrebe (39, 40) ist.

Eine besonders große Gewichtsseinsparung wird dadurch erreicht, dass der Hauptholm, die Seitenholme und/oder die Fahrerkabine-Stützen aus einem Profil in Form eines Hohlprofils und/oder eines T-Profils und/oder aus einem U-Profils gebildet sind.

Eine Integration des Verstärkungsblechs und der Seitenholme und/oder der Tragholme wird auf einfache Weise dadurch erreicht, dass das Verstärkungsblech an seinem freien Schenkel jeweils in einen Rand mit L-Profil übergeht, so dass diese Ränder die erste bzw. zweite Querstrebe bilden.

Eine zweckmäßige Weiterbildung der Erfindung besteht darin, dass in dem Raum oberhalb des Hauptholmes des Vorderwagens sowie zwischen den zugehörigen Stützen zum Tragen der Fahrerkabine und den Seitenholmen ein Wassertank angeordnet ist. Das hat den Vorteil, dass das Gewicht eines gefüllten Tanks unmittelbar auf den Hauptholm abgeführt werden kann.

Es ist ferner zweckmäßig, dass in dem Raum zwischen den freien Enden der Seitenholme des Vorderwagens ein Kraftstofftank angeordnet ist.

Nachfolgend wird die Erfindung anhand eines in der Zeichnung dargestellten Ausführungsbeispiels weiter erläutert. Es zeigen schematisch:
- Fig. 1: eine perspektivische Ansicht einer Straßenwalze;
- Fig. 2: eine teilweise geschnittene Seitenansicht der Straßenwalze;
- Fig. 3: eine Teilansicht eines Vorderwagens der Straßenwalze gemäß Fig. 1; und

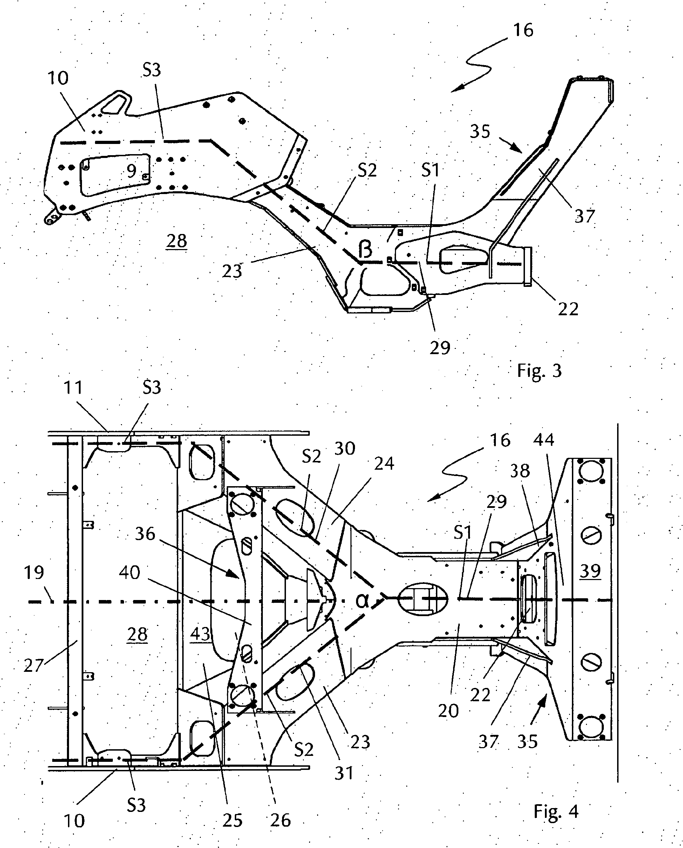

- Fig. 3: eine Draufsicht auf einen Vorderwagen-Rahmen der Straßenwalze;
- Fig. 4: eine Seitenansicht des Vorderwagen-Rahmens;

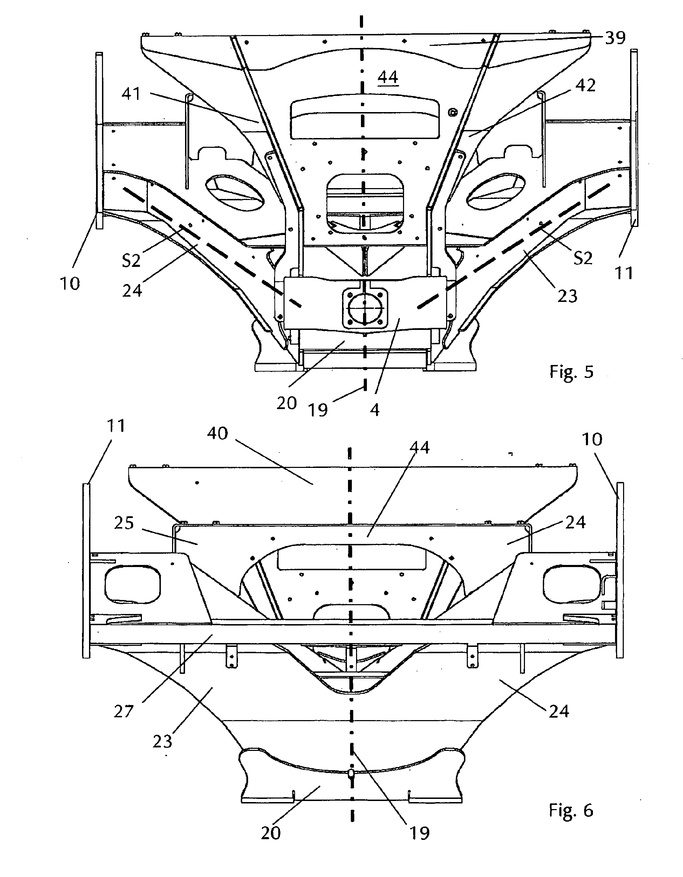

- Fig. 5: eine Ansicht des Vorderwagen-Rahmens von hinten;
- Fig. 6: eine Ansicht des Vorderwagen-Rahmens von vorne;

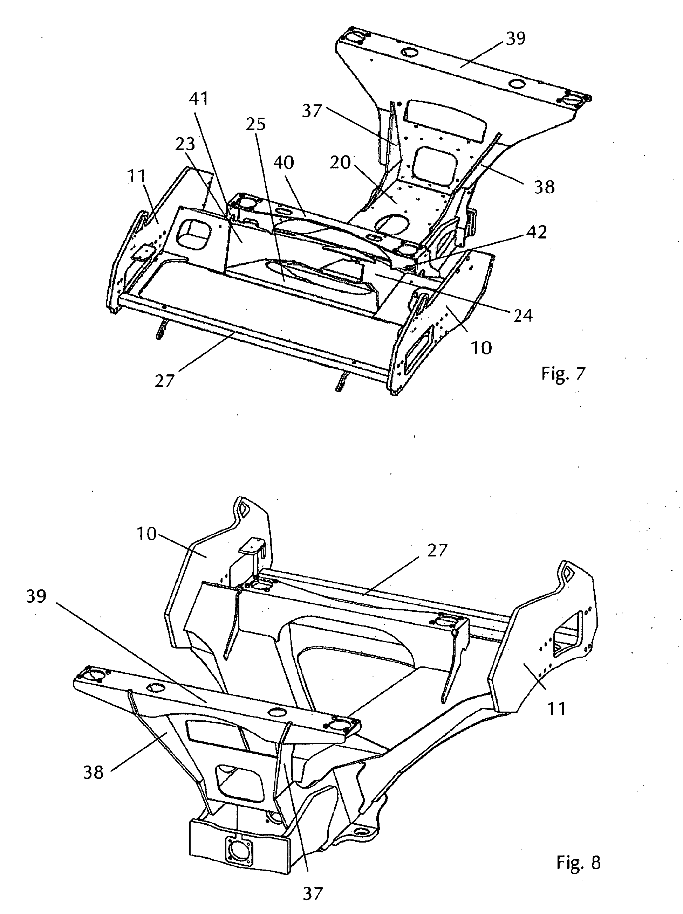

- Fig. 7: eine perspektivische Ansicht des Vorderwagen-Rahmens von vorne; und
- Fig. 8: eine perspektivische Ansicht des Vorderwagen-Rahmens von hinten.

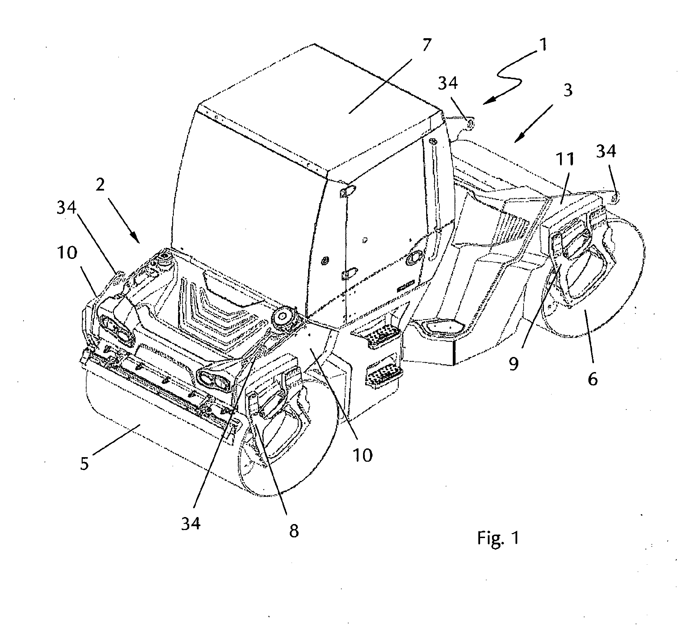

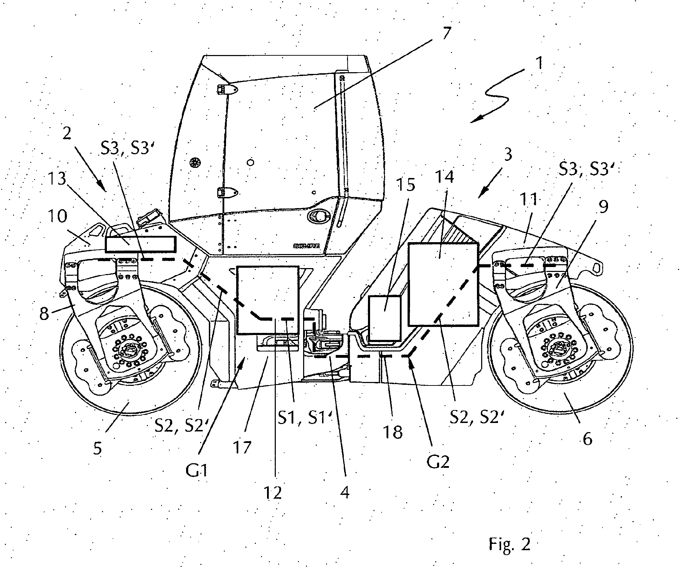

Fig. 1 und Fig. 2 veranschaulichen eine Straßenwalze 1 mit einem Vorderwagen 2 und einen Hinterwagen 3, die über ein Pendel-/Knickgelenk 4 (Fig. 2) miteinander verbunden sind. Am Vorderwagen 2 ist eine vordere Bandage 5 und am Hinterwagen 3 eine hintere Bandage 6 angeordnet. Die Straßenwalze ist ferner mit einer Fahrerkabine 7 auf dem Vorderwagen 2 versehen. Die Bandagen 5, 6 sind jeweils an einem Paar von vertikalen Stützen 8, 9 angeordnet, die sich jeweils an einem Paar von im Wesentlichen horizontal verlaufenden Tragstützen 10, 11 befinden. Die Tragstütze 10, 11 sind ferner Augen 34 zur Aufnahme von Kranhaken angeordnet, für den Fall, dass die Straßenwalze angehoben werden muss.

Im Vorderwagen 2 sind unter anderem ein Wassertank 12 und ein Kraftstofftank 13 angeordnet. Im Hinterwagen 3 befinden sich ein als Dieselmotor ausgebildeter Hauptantrieb 14 sowie Nebenantriebe 15.

Der Vorderwagen 2 und der Hinterwagen 3 weisen jeweils einen Tragrahmen auf, dessen Grundstruktur in Fig. 2 durch eine strichlierte Linie 17 bzw. 18 veranschaulicht ist. Die strichlierten Linien 17, 18 geben auch die Verläufe der Kraftflüsse zwischen dem Pendel-/Knickgelenk 4 und den Tragstützen 10, 11 am Vorderwagen 2 bzw. Hinterwagen 3 wieder. Demnach verlaufen die Krahflüsse im Anschluss an das Pendel-/Knickgelenk 4 jeweils in einem Strang S1, S1' im Wesentlichen horizontal in der Längsmittenebene 19 (Fig. 3) der Straßenwalze 1, gabeln sich in einem Bereich G1, G2 in jeweils zwei ansteigende Stränge S2, S2', die auch in Richtung auf die vordere bzw. hintere Bandage 5, 6 gerichtet sind, und enden in zwei Paaren horizontaler Stränge S3, S3' seitlich oberhalb der Bandagen 5, 6 in den Tragstützen 10, 11.

Die Figuren 3 bis 8 geben den Tragrahmen des Vorderwagens 2 (Vorderwagen-Rahmen 16) wieder, welche auch der Tragstruktur des Hinterwagens 3 entspricht. Die Ausführungen zum Vorderwagen-Rahmen 16 gelten daher auch für den Hinterwagen-Rahmen, der zur Vermeidung von Wiederholungen nicht in den Figuren dargestellt ist.

Wie insbesondere Fig. 3 und Fig. 4 veranschaulichen, ist der Vorderwagen-Rahmen 16 aus Holmen zusammengesetzt. Ein Hauptholm 20 verläuft horizontal in der Längsmittenebene 19 der Straßenwalze 1. An einem Ende des Hauptholms 20 ist eine vertikale Anschlussplatte 22 für das Pendel-/Knickgelenk 4 angebracht. Am freien Ende des Hauptholms gehen zwei Seitenholme 23, 24 V-förmig gespreizt und spiegelbildlich zur Längsmittenebene 19 vom Hauptholm 20 ab. Der Spreizwinkel α zwischen den beiden Seitenholmen 23, 24 ist ein spitzer Winkel, der in dem dargestellten Ausführungsbeispiel etwa 45° ausmacht. Hauptholm 20 und Seitenholme 23, 24 bilden demnach eine Y-Form. Der dreieckförmige Bereich zwischen den beiden Seitenholmen 23, 24 wird als Zwickel bezeichnet. Die beiden Seitenholme 23, 24 weisen ferner bezüglich des Hauptholms 20 unter einem stumpfen Winkel ß nach oben und kragen nach vorne über das Ende des Hauptholms 20 hinaus, d.h. sie sind von der Anschlussplatte 22 weg gerichtet.

An jedem Seitenholm 23, 24 ist endseitig eine der horizontalen Tragstützen 10 bzw. 11 angeordnet. Sie verlaufen frei auskragend parallel zum Hauptholm 20 und ihre freien Enden sind über die freien Enden der Seitenholme 23, 24 hinaus verlängert. Zwischen den freien Enden der beiden Seitenholme 23, 24 im Anschlussbereich der beiden Tragstützen 10, 11 verläuft zur Versteifung ein Verbindungsstück 25, das in dem dargestellten Beispiel als Verstärkungsblechteil ausgeführt ist, welches den Dreiecksraum zwischen den beiden Seitenholmen 23, 24 mit Ausnahme eines Durchbruchs 26 ausfüllt. Ferner ist zwischen den freien Enden der Tragstützen 10, 11 eine Traverse 27 angeordnet. Die beiden Seitenholme 23, 24 und die beiden Tragstützen überspannen einen Raum 28, in welchem sich die vordere Bandage 5 befindet.

In den Figuren 3 und 4 sind die Längsmittenachse 29 des Hauptholms 20, die Längsmittenachsen 30, 31 der Seitenholme 23, 24 und die Längsmittenachsen 32, 33 der Tragstützen 10, 11 als gestrichelte Linien angegeben. Sie veranschaulichen auch schematisch die Verläufe der Kraftflüsse S1, S2 und S3 in den entsprechenden Bauteilen. Aus Fig. 4 wird ersichtlich, dass die Kraftflüsse von den außen liegenden Tragstützen 10, 11 über die Seitenholme 23, 24 von außen nach innen zur Mitte führen und dort entlang des Hauptholms 20 zur Anschlussplatte 22.

An dem der Abschlussplatte 22 zugewandten Ende des Hauptholms 20 ist ein erster Sockel 35 angeordnet, welcher zusammen mit einem zweiten Sockel 36, der zwischen den beiden Seitenholmen 23, 24 verläuft, zur Aufnahme der Fahrerkabine 7 dient. Der erste Sockel 35 ist aus zwei Tragholmen 37, 38 und einer ersten Querstrebe 39 zusammengesetzt, welche die beiden freien Enden der Tragholme 37, 38 verbindet.

Wie auch in Fig. 5 und 6 veranschaulicht ist, sind beiden Tragholme 37, 38 wie die beiden Seitenholme 23, 24 V-förmig vom Hauptholm 20 spiegelbildlich zur Längsmittenebene 19 des Hauptholms 20 abgespreizt und ferner über das Ende des Hauptholms 20 und die Anschlussplatte 22 hinaus auskragend gerichtet. Durch die Auskragung liegt der erste Sockel 35 oberhalb des Pendel /Knickgelenks 4. Ferner kragt der heckseitige Rand der Fahrerkabine 7 über die freien Enden der Tragholme 37, 38 in Richtung auf den Hinterwagen 3 so weit aus, dass ein Teil des Hinterwagens 3 unterhalb des Heckteils der Fahrerkabine 7 zu liegen kommt.

Der zweite Sockel 36 ist aus zwei vertikalen Fahrerkabine-Stützen 41, 42 und einer zweiten Querstrebe 40 gebildet, die sich zwischen den beiden Stützen 41, 42 und parallel zur ersten Querstrebe 39 erstreckt. Die Stützen 41, 42 gehen von den Seitenholmen 23, 24 in den Bereichen ab, in welchen die Enden der Seitenholme 23, 24 mit den horizontalen Tragstützen 10, 11 verbunden sind. Auf der zweiten Querstrebe 40 ist die Fahrerkabine 7 mit ihrem vorderen Bereich abgestützt.

In dem Zwickel zwischen den Seitenholmen 23, 24 des oben beschriebenen Seitenholmpaares und den Fahrerkabine-Stützen 41, 42 ist jeweils eine Versteifung aus einem Verstärkungsblech 43 bzw. 44 angebracht. In dem dargestellten Beispiel ist das Verstärkungsblech 43 an seinem freien Schenkel Teil der Querstrebe 39 bzw. 40. Das Verstärkungsblech 43 geht dabei an seinem freien Schenkel jeweils in einen Rand mit L-Profil über, wobei die beiden L-Schenkel des L-Profils die erste und zweite Querstrebe 39, 40 bilden. Unter Verstärkungsblech wird im vorliegenden Zusammenhang ein mehrere Millimeter dickes Stahlblech verstanden.

Der Hauptholm 20 und die Seitenholme 23, 24 sind als Rohrprofil-Körper ausgebildet. Im Ausführungsbeispiel sind sie im Wesentlichen wie ein Vierkantrohr geformt. Die Tragholme 37, 38 weisen ein T-Profil auf.

## Patentansprüche

1. Straßenwalze (1) mit einem Vorderwagen (2) und einem Hinterwagen (3), die über ein Pendel-/Knickgelenk (4) miteinander verbunden sind, wobei der Vorderwagen (2) und der Hinterwagen (3) einen Vorderwagen-Rahmen und einen Hinterwagen-Rahmen aufweisen,
**dadurch gekennzeichnet,**
**dass** der Vorderwagen-Rahmen und/oder der Hinterwagen-Rahmen aus Holmen besteht, mit jeweils einem Hauptholm (20), der horizontal in der Längsmittenebene (19) der Straßenwalze (1) verläuft und an dessen einem Ende das Pendel-/Knickgelenk (4) angeordnet ist, und mit zwei vom freien Ende des Hauptholms (20) V-förmig und spiegelbildlich zur Längsmittenebene (19) abgehenden Seitenholmen (23, 24), nach oben ausgerichtet sind, dass die Seitenholme (23, 24) ferner über das freie Ende des Hauptholms (20) frei auskragend angeordnet sind, dass an den freien Enden der Seitenholme (23, 24) parallel zum Hauptholm (20) verlaufende und frei auskragende Tragstützen (10, 11) angeordnet sind, an welchen eine Bandage (5, 6) angeordnet ist.

2. Straßenwalze (1) nach Anspruch 1,
**dadurch gekennzeichnet,**
**dass** an dem dem Pendel-/Knickgelenk (4) zugewandten Ende des Hauptholms (20) des Vorderwagens (2) nach oben gerichtete sowie V-förmig und spiegelbildlich zur Längsmittenebene (19) angeordnete Tragholme (37, 38) zum Tragen einer Fahrerkabine (7) angeordnet sind.

3. Straßenwalze (1) nach Anspruch 2,
**dadurch gekennzeichnet,**
**dass** zwischen den freien Enden der Seitenholme (23, 24) und/oder den Fahrerkabine-Tragholmen (37, 38) jeweils ein Verbindungsstück (25) angeordnet ist.

4. Straßenwalze (1) nach Anspruch 2 oder 3,
**dadurch gekennzeichnet,**
**dass** zwischen den Seitenholmen (23, 24) eines Seitenholmpaares und/oder den Tragholmen (37, 38) zum Tragen der Fahrerkabine (7) eine Versteifung aus einem Verstärkungsblech (43, 44) angeordnet ist, das in den Zwickel zwischen den Seitenholmen (23, 24) eines Seitenholmpaares bzw. in den Bereich zwischen den Tragholmen (37, 38) eingesetzt ist.

5. Straßenwalze (1) nach einem der vorhergehenden Ansprüche 2 bis 4,
**dadurch gekennzeichnet,**
**dass** zwischen den freien Enden der Seitenholme (23, 24) und/oder der Tragholme (37, 38) jeweils eine Querstrebe (39, 40) angeordnet ist.

6. Straßenwalze (1) nach Anspruch 4 und 5,
**dadurch gekennzeichnet,**
**dass** das Verstärkungsblech (43, 44) zwischen den freien Enden der Seitenholme (23, 24) und/oder der Stützen (41, 42) ein Teil der betreffenden Querstrebe (39, 40) ist.

7. Straßenwalze (1) nach einem der vorhergehenden Ansprüche,
**dadurch gekennzeichnet,**
**dass** auf den Seitenholmen (23, 24) des Vorderwagens (2) vertikale Stützen (41, 42) zum Tragen der Fahrerkabine (7) angeordnet sind.

8. Straßenwalze (1) nach einem der vorhergehenden Ansprüche,
**dadurch gekennzeichnet,**
**dass** der Hauptholm (20), die Seitenholme (23, 24) und/oder die Fahrerkabine-Stützen (41, 42) aus einem Profil in Form eines Hohlprofils und/oder eines T-Profils und/oder eines U-Profils gebildet sind.

9. Straßenwalze (1) nach einem der vorhergehenden Ansprüche,
**dadurch gekennzeichnet,**
**dass** in dem Raum oberhalb des Hauptholmes (20) des Vorderwagens (2) oder des Hinterwagens (3) sowie zwischen den zugehörigen Fahrerkabine-Stützen (41, 42) und den Seitenholmen (23, 24) ein Wassertank (12) angeordnet ist.

10. Straßenwalze (1) nach einem der vorhergehenden Ansprüche,
**dadurch gekennzeichnet,**
**dass** in dem Raum zwischen den freien Enden der Seitenholme des Vorderwagens (2) oder des Hinterwagens (3) ein Kraftstofftank (13) angeordnet ist.

## Claims

1. A road roller (1) having a front carriage (2) and a rear carriage (3), which are interconnected by an articulated swivel joint (4), the front carriage (2) and the rear carriage (3) having a front carriage frame and a rear carriage frame,
**characterized in that**
said front carriage frame and/or said rear carriage frame consist of beams, comprising in each case a main beam (20), which extends horizontally in the longitudinal median plane (19) of said road roller (1) and at one end of which said articulated swivel joint (4) is disposed, and comprising two side beams (23, 24) diverging from the free end of said main beam (20) in a "V" shape and in a mirror-inverted relationship about said longitudinal median plane (19) and oriented upwardly, that further said side beams (23, 24) freely overhang the free end of said main beam (20), and that freely overhanging load-bearing supports (10, 11), which extend parallel to said main beam (20) and on which a drum (5, 6) is mounted, are disposed at the free ends of said side beams (23, 24).

2. The road roller (1) according to claim 1,
**characterized in that**
at that end of said main beam (20) of said front carriage (2) that is near to said articulated swivel joint (4), upwardly oriented supporting beams (37, 38) are disposed in a "V" shape and in a mirror-inverted relationship about said longitudinal median plane (19) for the purpose of supporting a driver's cab (7).

3. The road roller (1) according to claim 2,
**characterized in that**
a connector (25) is disposed between the free ends of said side beams (23, 24) and/or said supporting beams (37, 38) for said driver's cab.

4. The road roller (1) according to claim 2 or 3,
**characterized in that**
between the side beams (23, 24) of a pair of side beams and/or between said supporting beams (37, 38) for supporting said driver's cab (7) a stiffener consisting of a reinforcing plate (43, 44) is disposed, which is located in the interspace between said side beams (23, 24) of a pair of side beams or in the region between said supporting beams (37, 38).

5. The road roller (1) according to any one of the preceding claims 2 to 4,
**characterized in that**
a transversal strut (39, 40) is respectively disposed between the free ends of said side beams (23, 24) and/or said supporting beams (37, 38).

6. The road roller (1) according to claim 4 and 5,
**characterized in that**
said reinforcing plate (43, 44) forms part of the respective transversal strut (39, 40) between the free ends of said side beams (23, 24) and/or said supports (41, 42).

7. The road roller (1) according to any one of the preceding claims,
**characterized in that**
vertical supports (41, 42) are disposed on said side beams (23, 24) of said front carriage (2) for the purpose of supporting said driver's cab (7).

8. The road roller (1) according to any one of the preceding claims,
**characterized in that**
said main beam (20), said side beams (23, 24) and/or said supports (41, 42) for the driver's cab are formed by a profile in the form of a hollow profile and/or a T profile and/or a U profile.

9. The road roller (1) according to any one of the preceding claims,
**characterized in that**
a water tank (12) is disposed in the space above said main beam (20) of said front carriage (2) or said rear carriage (3) and between the associated supports (41, 42) for said driver's cab and said side beams (23, 24).

10. The road roller (1) according to any one of the preceding claims,
**characterized in that**
a fuel tank (13) is disposed in the space between the free ends of said side beams of said front carriage (2) or said rear carriage (3).

## Revendications

1. Rouleau compresseur (1) ayant une section avant (2) et une section arrière (3), qui sont interconnectées par un joint pivotant articulé (4), la section avant (2) et la section arrière (3) comprenant un châssis de section avant et un châssis de section arrière,
**caractérisé en ce que**
ledit châssis de section avant et/ou ledit châssis de section arrière est/sont constitué(s) de traverses, comprenant dans chaque cas une traverse principale (20) qui s'étend horizontalement dans le plan médian longitudinal (19) dudit rouleau compresseur (1) et à une extrémité de laquelle est disposé ledit joint pivotant articulé (4), et comprenant deux traverses latérales (23, 24) divergeant de l'extrémité libre de ladite traverse principale (20) selon une forme en V et en relation d'image inversée géométriquement par rapport audit plan médian longitudinal (19) et orientées vers le haut, **en ce que**, de plus, lesdites traverses latérales (23, 24) surplombent librement l'extrémité libre de ladite traverse principale (20), et **en ce que** des supports de charge (10, 11) librement en porte-à-faux, qui s'étendent parallèlement à ladite traverse principale (20) et sur lesquels est monté un cylindre (5, 6) sont disposés aux extrémités libres desdites traverses latérales (23, 24).

2. Rouleau compresseur (1) selon la revendication 1,
**caractérisé en ce que**
à l'extrémité de ladite traverse principale (20) de ladite section avant (2) qui est proche dudit joint pivotant articulé (4), des traverses de support orientées vers le haut (37, 38) sont disposées selon une forme en V et en relation d'image inversée géométriquement par rapport audit plan médian longitudinal (19), dans le but de supporter une cabine conducteur (7).

3. Rouleau compresseur (1) selon la revendication 2,
**caractérisé en ce que**
un élément de liaison (25) est placé entre les extrémités libres desdites traverses latérales (23, 24) et/ou desdites traverses de support (37, 38) pour ladite cabine conducteur.

4. Rouleau compresseur (1) selon la revendication 2 ou 3,
**caractérisé en ce que**
entre les traverses latérales (23, 24) d'une paire de traverses latérales et/ou entre lesdites traverses de support (37, 38) destinées à supporter ladite cabine conducteur (7), est placé un raidisseur constitué d'une plaque de renforcement (43, 44), qui est situé dans l'espace situé entre lesdites traverses latérales (23, 24) d'une paire de traverses latérales ou dans la zone située entre lesdites traverses de support (37, 38).

5. Rouleau compresseur (1) selon l'une quelconque des revendications 2 à 4, **caractérisé en ce que**
un étrésillon transversal (39, 40) est respectivement disposé entre les extrémités libres desdites traverses latérales (23, 24) et/ou desdites traverses de support (37, 38).

6. Rouleau compresseur (1) selon les revendications 4 et 5,
**caractérisé en ce que**
ladite plaque de renforcement (43, 44) forme une partie de l'étrésillon transversal respectif (39, 40) entre les extrémités libres desdites traverses latérales (23, 24) et/ou desdits supports (41, 42).

7. Rouleau compresseur (1) selon l'une quelconque des revendications précédentes,
**caractérisé en ce que**
des supports verticaux (41, 42) sont disposés sur lesdites traverses latérales (23, 24) de ladite section avant (2) dans le but de supporter ladite cabine conducteur (7).

8. Rouleau compresseur (1) selon l'une quelconque des revendications précédentes,
**caractérisé en ce que**
ladite traverse principale (20), lesdites traverses latérales (23, 24) et/ou lesdits supports (41, 42) pour la cabine conducteur sont formés par un profilé prenant la forme d'un profilé creux, et/ou d'un profilé en T, et/ou d'un profilé en U.

9. Rouleau compresseur (1) selon l'une quelconque des revendications précédentes,
**caractérisé en ce que**
un réservoir à eau (12) est disposé dans l'espace situé au-dessus de ladite traverse principale (20) de ladite section avant (2) ou de ladite section arrière (3) et entre les supports associés (41, 42) pour ladite cabine conducteur et lesdites traverses latérales (23, 24).

10. Rouleau compresseur (1) selon l'une quelconque des revendications précédentes,
**caractérisé en ce que**
un réservoir à carburant (13) est disposé dans l'espace situé entre les extrémités libres desdites traverses latérales de ladite section avant (2) ou de ladite section arrière (3).
